# EUROPEAN PATENT SPECIFICATION

(11) **EP 1 661 360 B1**
(45) Date of publication and mention of the grant of the patent: **24.05.2017**
(21) Application number: 04763081.9
(22) Date of filing: 02.07.2004
(51) Int. Cl.: H04L 29/06, H04L 12/58

(54) **METHOD FOR MANAGING PRESENCE SERVICES IN A COMMUNICATION SYSTEM WITH HETEROGENEOUS PRESENCE PROTOCOLS**
VERFAHREN ZUR VERWALTUNG VON PRÄSENZDIENSTEN IN EINEM KOMMUNIKATIONSSYSTEM MIT HETEROGENEN PRÄSENZPROTOKOLLEN
METHODE POUR LA GESTION DES SERVICES DE PRESENCE DANS UN RESEAU AVEC DES PROTOCOLES DE PRESENCE HETEROGENES

(30) Priority: 29.08.2003 EP 03425563; 23.12.2003 EP 03425818
(43) Date of publication of application: 31.05.2006
(73) Proprietor: Siemens Aktiengesellschaft, 80333 München (DE)
(72) Inventor: BOSSOLI, Francesca, I-50019 Sesto Fiorentino (FI) (IT); DE ZEN, Giovanna, I-31011 Asolo (TV) (IT); LIPKA, Michael, 80687 München (DE); BLAIOTTA, Donatella, I-27100 Pavia (IT)
(86) International application number: PCT/EP2004/007244
(87) International publication number: WO 2005/022863

(56) References cited:
- WO-A-01/56308
- WO-A-03/094011
- CAMPBELL B ET AL: "CPIM Mapping of SIMPLE Presence and Instant Mapping" INTERNET, 26 June 2002 (2002-06-26), XP002249474 Retrieved from the Internet: URL:www.ietf.org> [retrieved on 2003-07-29] cited in the application
- PATENT ABSTRACTS OF JAPAN vol. 015, no. 401 (E-1121), 11 October 1991 (1991-10-11) & JP 03 162154 A (NEC SOFTWARE LTD), 12 July 1991 (1991-07-12)
- P. SAINT-ANDRE: "XMPP CPIM Mapping" DRAFT-IETF-XMPP-CPIM-02.TXT, 22 August 2003 (2003-08-22), XP015003677
- BOSSOLI ET AL: "Proposal for Common Interoperability Protocol" INTERNET, 30 August 2003 (2003-08-30), XP002283230
- "The Wireless Village Initiative: White Paper" INTERNET, 2002, XP002249477 Retrieved from the Internet: URL:www.openmobilealliance.org/wvindex.htm l> [retrieved on 2003-07-29]
- MIERLA D: "SER's SIMPLE2Jabber gateway" INTERNET, 27 January 2003 (2003-01-27), XP002249476 Retrieved from the Internet: URL:www.iptel.org/ser> [retrieved on 2003-07-29]

## Description

### Field of the Invention

The present invention concerns communication systems supporting presence-based services, and more particularly it refers to a method of managing presence-based services in a communication system with heterogeneous presence protocols, and to a communication system implementing the method.

Preferably, but not exclusively, the invention is intended for managing presence-based services in mobile communication networks.

### Background of the invention

Presence service is a service available since some years for wireline Internet users, generally in connection with Instant Messaging service, to allow users of the Instant Messaging service to keep track of the online status or availability of their correspondents and to be informed of changes in such status/availability. Instant Messaging is a fast, interactive and mainly text based communication method in which the subscribers to the service who are active can immediately see the messages sent by their correspondents. In general, "presence information" communicated within a presence service contains various dynamic information items such as reachability, availability and location of the user for communication. Said information is generally contained in a so-called "presence document" included in specific messages related with the service. The combination of instant messaging and presence services is called an instant messaging and presence service (IM&P).

The essential features of an IM&P are disclosed in documents RFC 2778 "A Model for Presence and Instant Messaging" by M. Day et al., February 2000, and RFC 2779 "Instance Messaging/Presence Protocol Requirements" by M. Day et al., of the IETF (Internet Engineering Task Force). Said documents are available at IETF site http://www.ietf.org/rfc.html.

This kind of service is presently being proposed also for wireless networks.

Presence services for wireless networks provide the ability for a network to manage presence information of a user, of his device, services or service media even whilst roaming. User's presence information may be obtained through input from the user, information supplied by network entities or by elements external to the home network. The source of presence information is referred to as "presentity". Consumers of presence information, i.e. watchers, may be internal or external to the home network. Exploitation of this service will enable the creation of wireless-enhanced rich multimedia services along the lines of those currently present in the Internet world.

Specifications for a mobile IM&P have been established for instance by Open Mobile Alliance (OMA) through the Wireless Village (WV) initiative and the WV specification v 1.2 have been published within IMPS (Instant Messaging and Presence Service) working group "OMA-IMPS-V1_2_Candidate_Package-V1; Definition for IMPS v1.2; Draft Version 2003-01-171.

Besides OMA, also other standardisation bodies have developed, or are developing, presence services related specifications/recommendations utilisable in wireless environment. We may mention here:
- IETF (Internet Engineering Task Force) with SIMPLE (SIP for Instant Messaging and Presence Leveraging Extensions) and XMPP (Extensible Messaging and Presence Protocol). The present status of the work in progress on said items is disclosed in a number of Internet Drafts. For SIMPLE, see e.g. the following ones:
   draft-ietf-impp-cpim-03 "Common Presence and Instant Messaging (CPIM)"; draft-ietf-impp-pres-02 "Common Profile for Presence (CPP)"; draft-ietf-impp-pidf-07 "Common Presence and Instant Messaging (CPIM) Presence Information Data Format"; draft-ietf-cpim-mapping-01 "CPIM Mapping of SIMPLE Presence and
   Instant Messaging"; draft-ietf-simple-data-req-02 "Requirements for Manipulation of Data Elements in Session Initiation Protocol (SIP) for Instant Messaging and
   Presence Leveraging Extensions (SIMPLE) Systems"; draft-ietf-simple-event-list-01 "A Session Initiation Protocol (SIP) Event Notification Extension for Collections";
   draft-ietf-simple-presence-10 "A Presence Event Package for Session Initiation Protocol (SIP)"; draft-ietf-simple-winfo-package-05 "A Watcher Information Event Template-Package for the Session Initiation Protocol (SIP)"; draft-ietf-presence-winfo-format-04 "An Extensible Markup Language (XML) Based Format for Watcher Information". For XMPP, see e.g. Internet Drafts draft-ietf-xmpp-core-07 "XMPP Core" and draft-ietf-xmpp-im-07 "XMPP Instant Messaging". IETF Internet Drafts are available at site http://www.ietf.org/internet-drafts;
- PAM (Presence and Availability Management) Forum (see European Standard ES 202915-14)
- 3GPP (3rd Generation Project Partnership) with Presence Services in IMS [IP (Internet Protocol) Multimedia Subsystem] Architecture (see Technical Specifications TS 22.141 and TS 23.141 and Technical Report TR 24.841).

It is not necessary to go in deeper details about the different protocols proposed or being studied, since they are well known to those skilled in the art.

Given the availability of different solutions for presence services, the existence of interoperability problems is immediately apparent. On the one side, a widely agreed solution for mobile market is still missing (in spite of the WV initiative), and it is not acceptable that subscribers of two local mobile operators cannot see their respective presence information and exchange instant messages. On the other side, mobile operators expect to be able to allow the interactions between mobile and Internet users and between mobile and corporate users for any presence enabled services starting from Instant Messaging.

The problem of ensuring interoperability between different platforms has not yet found a global solution.

WO-A 01/56308 discloses an instant messaging service utilisable both in wireline and in wireless networks.

3GPP Technical Specification TS 22.141 identifies the requirements for supporting the service in an interoperable manner both within the wireless network and with external networks, but does not teach how interoperability between different systems can actually be obtained.

PAM proposes a software system managing a plurality of domains with different administrative entities, by operating at the application level, i.e. at higher level than the protocol level. In such situation, firewalls between the different domains are indispensable for security reasons, and such firewall prevent the managing system for operating correctly.

Some systems (e.g. Wireless Village or XMPP) propose a protocol-specific gateway that allows the interconnection to foreign systems (e.g. XMPP -> SIMPLE, XMPP -> PAM). Yet the gateway features/behaviour are not been disclosed. Therefore the technician has no indication on how to map the procedures and the presence document formats envisaged by the different protocols into a corresponding procedure and document format in the other protocol. In any case, even if the gateways were defined, using protocol-specific gateways would be an expensive solution, in that each provider of the presence service would be compelled to have gateways for all other protocols. Moreover, in case of mobile communication networks, an operator, in order to provide protocol-specific gateways, needs to know all characteristics of the presence services managed by other operators: this is a serious hindrance to the development of the gateways, since generally the operators do not like to disclose such kind of information to the concurrence.

Campbell et al., "CPIM Mapping of SIMPLE Presence and Instant Messaging", INTERNET, 26 June 2002, XP0022249474, retrieved from the Internet, URL: www.ietf.org, discloses a mapping between CPIM (Common Presence and Instant Messaging) and SIMPLE. The document proposes a gateway for handling this mapping and describes some rules for the contents of the SUBSCRIBE and NOTIFY requests. The gateways are the terminating points for SIP transactions and have therefore to store transaction states. Yet CPIM describes the semantics of an abstract protocol, and not an actual presence protocol. In case of concrete protocols, the document neither provides any teaching on how to perform a mapping between SIMPLE and another protocol nor it suggests the use of an interoperability protocol.

PATENT ABSTRACTS OF JAPAN Vol. 015, no. 401 (E-1121) discloses a way of interconnecting different networks through a gateway setting up the connection by using an intermediate protocol. The prior art solution concerns interconnection among networks connected to a same gateway, and the result is one gateway with several protocol-specific interfaces, where each interface is connected through the specific intermediate protocol, internally to the gateway. No indication about the interworking among remote networks, i. e. networks connected to different gateways, is provided. A gateway with an interface for each protocol has substantially the drawbacks mentioned above for the use of protocol-specific gateways. No information is provided about the kinds of networks, nor on the protocols in the different networks, nor on the intermediate protocol. The latter seems to be a specific language inside the gateway processor rather than an actual communication protocol. In no way therefore the skilled in the art could receive useful teachings for the interoperability among presence protocols, by using an actual presence protocol as the interoperability protocol.

WO 03/094011 A discloses an architecture in which Internet Service Providers (ISPs) offering presence-based services handle the service through a local server or a universal server, depending on whether the users being to exchange the presence information are registered with the same ISP or with different ISPs. Use of different servers entails structural and procedural complexity. The universal server is said to make use of XML format as a universal format. The document provides a solution where no mapping between local and interoperability procedures and documents is performed.

The invention just aims at overcoming the above drawbacks, by providing a "global" and concrete solution for the problem of the interoperability between heterogeneous presence services. The solution is based on the use of an actual presence protocol as an interoperability protocol and it does not require a plurality of protocol-specific gateways or different servers in each subsystem.

### Summary of the invention

The invention is defined by a method according to claim 1 and a system according to claim 6.

According to an embodiment of the invention the invention, there is provided a method comprising the steps of:
- providing a signalling network supporting the interoperability presence protocol;
- connecting each of the subsystems to said signalling network through a respective gateway providing for conversion of presence-service messages from a local protocol of that subsystem into the interoperability protocol and vice-versa; and
- forwarding presence-service messages converted into said interoperability protocol from an originating subsystem to a destination subsystem over said signalling network.

In case of messages including a presence document, the latter will be drafted in a protocol-specific format. To ensure a complete interoperability, the method also comprises the steps of:
- converting the presence document produced by an entity of said originating subsystem from the format specific for the local protocol of the originating subsystem into an interoperability format supported by said interoperability protocol, thereby building an interoperability presence document;
- including said interoperability presence document into a predetermined information field of the proper message, organised according to said interoperability protocol, to be forwarded over said signalling network; and
- extracting an interoperability presence document to be passed to an entity in the destination subsystem from said message field, and converting the document into the format required by said destination subsystem.

A global solution, as proposed by the invention, has significant advantages over the protocol-specific gatewaying:
- each subsystem needs to be equipped with the only protocol conversion gateway between its local protocol and the common protocol, and the interface towards the common protocol is identical for all gateways;
- the approach has no limitation: also XMPP and WV can use it, as the proprietary gateway envisaged in the related specifications can be realised toward the common protocol, avoiding the implementation of a gateway for each protocol to interoperate with;
- global rules for protocol conversion can be deployed;
- the usage of a common protocol for interoperability would permit the definition of a common presence document as reference document.

This choice would also result in a simplification for newly deployed systems. In fact, it could represent maybe a constraint, as it would be a standard to which be compliant, but it would guarantee global interoperability to new systems deployed according to approved common protocol.

Moreover, since the solution concerns protocol level, interoperability is not negatively affected by any firewall.

Any of the existing presence protocols mentioned above could be a candidate to become the common protocol, even if IETF SIMPLE and PAM protocols seem to be better suited to a global solution. Indeed, SIMPLE protocol aims at making independent IM&P applications interoperable through the network, and PAM protocol aims at sharing presence and availability information across multiple services and networks by using PAM Interfaces (APIs).

In the preferred embodiment of the invention, SIMPLE is chosen as the common protocol. This choice is justified by a number of reasons:
- SIMPLE is really a plain protocol. It is based on the extensions of SIP (Session Initiation Protocol) (see IETF document RFC 3261 "SIP: Session Initiation Protocol" by J. Rosenberg and H. Schulzrinne), which is a consolidated IP based protocol, supported by most networks. In this respect it is to be appreciated that:
   - SIP infrastructures already exist for supporting voice (so that a fast implementation of the method on existing networks is possible);
   - Mobile network trend leads towards all-IP networks and proposes SIP as the protocol for handling services (the choice is thud compliant with evolution trends);
- SIMPLE is already used within 3GPP - IMS architecture for supporting Presence Services.
- Diffusion: several existing products are based on SIMPLE.
- Flexibility: SIMPLE allows the creation of a number of new headers that permit the mapping of not SIMPLE parameters.
- The protocol is continuously improved within SIMPLE IETF WG.

Preferably moreover, the interoperability format adopted for the presence document is an XML-based format. This choice is dictated by the fact that most of the presence documents formats proposed for wireless applications are already XML-based formats. Most preferably, the interoperability format is an extension of the CPIM/PIDF (Presence Information Data Format) and RPIDF (Rich PIDF) formats defined by IETF for SIMPLE. Thus, the best consistency with the interoperability protocol is attained.

In a second embodiment of the invention, there is provided a communication system comprising: a signalling network supporting the interoperability protocol, which is a concrete presence protocol, and transporting presence-service messages organised in the interoperability protocol; and a gateway in each subsystem for connecting the subsystem with said signalling network, said gateway comprising first and second gateway elements implementing said protocol conversion means and providing for mapping local protocol procedures into interoperability protocol procedures and for mapping interoperability protocol procedures into local protocol procedures, respectively.

In case of messages including a presence document, said conversion means are further arranged to: convert a presence document produced by an originating entity from the format specific for the local protocol of the originating subsystem into an interoperability presence document drafted in an interoperability format supported by said interoperability protocol; to include said interoperability presence document into a predetermined information field of a message organised according to said interoperability protocol, to be forwarded over said signalling network; and extract an interoperability presence document to be passed to a destination entity from said message field and to convert said document into the format required by the local protocol of the subsystem of the destination entity.

### Brief description of the drawings

The invention will be better understood from the following description of a preferred embodiment, given by way of non-limiting example, with reference to the accompanying drawings, in which:
- Fig. 1 is a schematic block diagram of a communication system employing the invention;
- Fig. 2 is a schematic representation of a gateway;
- Fig. 3 is a more detailed block diagram of part of the system of Fig. 1;
- Fig. 4 shows an example of protocol conversion for one of the procedures envisaged for the interoperability protocol;
- Figs. 5A to 5C are examples of mappings of information items of a presence documents; and
- Figs. 6 and 7 are graphical representations of the XML Schema allowing the creation of the interoperability presence document provided by the invention.

### Description of the preferred embodiment

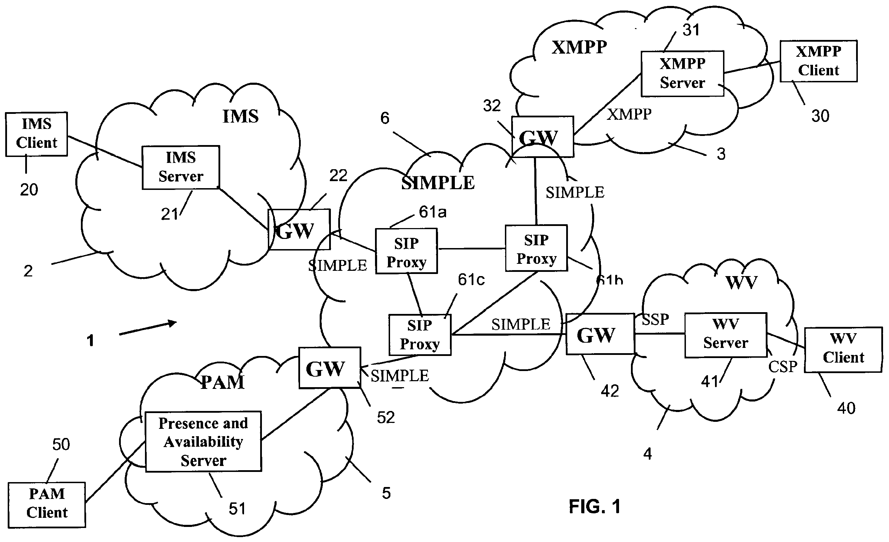

Referring to Fig. 1, a communication system 1 according to the invention is made up of a plurality of communication subsystems (or domains) 2, 3, 4, 5 offering their clients a presence service based on a respective local presence protocol, different from the protocol(s) used by one or more (or even all) of the other subsystems. Subsystems 2 - 5 may include both mobile (or wireless) communication networks and wireline communication networks like the Internet. In the preferred application of the invention however subsystems 2 - 5 are mobile communication networks of different operators. Reference 20, 30, 40, 50 indicate clients of the presence services in subsystems 2 - 5.

The drawing shows subsystems 2 - 5 supporting presence services based on IMS, XMPP, Wireless Village (WV) and PAM Forum architectures, respectively. Preferably, the local presence protocols in those subsystems are protocols providing for a local interoperability. PAM and XMPP are already defined as interoperability protocols. As to IMS and WV subsystems, it is assumed that IMS subsystem 2 (as well as any other subsystem using a SIP-based architecture) uses the SIMPLE protocol and that WV subsystem 4 uses the SSP protocol. The units managing the presence service are not shown in detail and are schematically indicated by 21, 31, 41 and 51, respectively, generally denoted "Servers".

Further details on how the individual presence services are actually implemented are not necessary for the understanding of the present invention, which does not affect the individual services.

According to the invention, interoperability between the different presence services is obtained through the usage of a common (or interoperability) protocol, which in the preferred embodiment of the invention is the SIMPLE protocol, for the reasons set forth in the introduction of the specification.

The following procedures must be supported by the common protocol:
- Basic procedures: publishing, subscription/unsubscription, notification;
- Other procedures: asking for watcher information; asking for watcher authorisation; updating of presence information.

Those procedures are well known to the skilled in the art and they need not to be explained here.

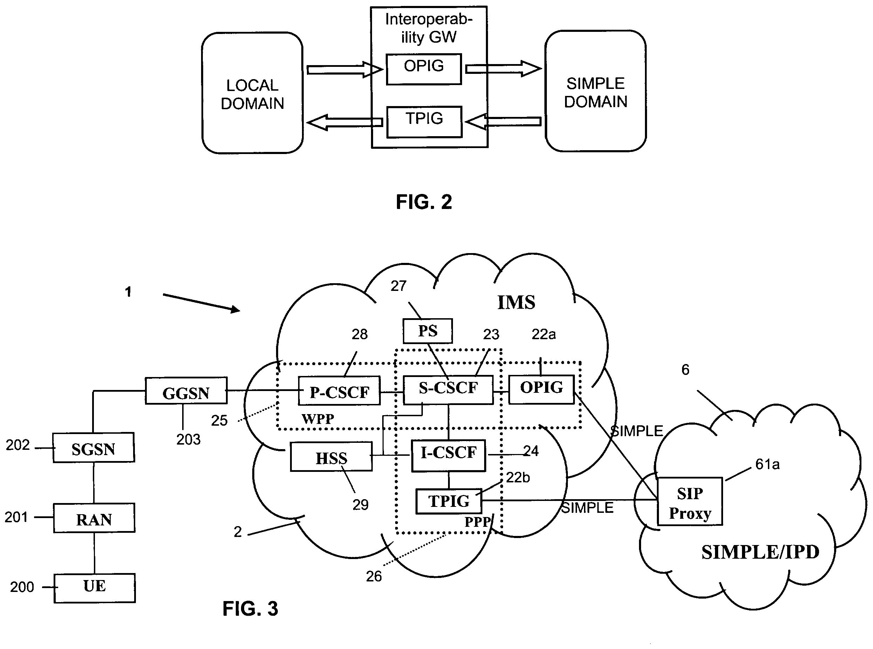

Translation functions are needed to map or convert the procedures of the local presence protocols into the common protocol and vice-versa. The mapping is performed by suitable interoperability gateways connected to subsystems 2 - 5. As shown in Fig. 2, each gateway comprises two gateway elements: the element that maps the local domain presence procedures into SIMPLE-based interoperability procedures is denoted OPIG (Originating Presence Interoperability Gateway), and the element that maps SIMPLE-based interoperability procedures into local presence procedures Is denoted TPIG (Terminating Presence Interoperability Gateway).

The two gateway elements are separately shown in Fig. 3 for subsystem 2 (blocks 22a, 22b). That Figure shows also in more details, for the same subsystem 2, the units managing the presence service and their connection to the elements of a mobile communication network.

Such units include Presence Server (PS) 27 and the units intended with managing the Call Session Control Functions (CSCF), namely the Proxy-CSCF (P-CSCF, block 28), the serving CSCF (S-CSCF, block 23) and the Interrogating CSFC (I-CSCF, block 24). Also shown is the Home Subscriber Server (HSS) 29, i.e. the data base containing the data relevant to the presence service users in subsystem 2 (e.g. user's profile, subscribed services, information on whether the user is registered, etc.). User equipment (UE) 200 is the client, which accesses P-CSCF 28 through the radio access network (RAN) 201, the Service GPRS Supporting Node (SGSN) 202 and the Gateway GPRS Supporting Node (GGSN) 203.

The functions of said units are defined in the 3GPP specifications mentioned above.

Dotted-line blocks 25, 26 labelled WPP and PPP, respectively, indicate that units 22a, 22b, 23, 24 and 28 are part of the so-called Watcher Presence Proxy and Presentity Presence Proxy. The location of blocks 22a and 22b in WPP and PPP, respectively, corresponds to assuming that client 200 is a watcher subscribing to presence information of a presentity, possibly connected to one of the other subsystems: the messages originated by watcher 200 are thus to be handled by OPIG 22a, whereas TPIG 22b has to handle requests by external watchers for presence information of a presentity in IMS.

It is also to be appreciated that the connection of the mobile network elements shown in Figure 3, in which the presence server is not directly involved, is specific for the IMS domain and will generally be different in other domains. For instance, in case of a presence service based on the WV architecture, the GGSN would be connected to the presence server.

Turning again also to Fig. 1, the use of a common protocol implies the provision of a corresponding signalling network 6 - in the present case a SIP-SIMPLE signalling network - supporting it and connecting the various subsystems. The structure of a SIP network needs not to be disclosed in detail, and is here schematically shown by a number of SIP proxies 61a, 61b, 61c... connected to each other and to gateways 22 (22a, 22b), 32, 42, 52.

The SIMPLE interfaces of gateways 22, 32, 42, 52 are part of SIP network 6 and, using SIP terminology, they act as:
- SIP User Agents (UA) if the local domain is not based on SIP/SIMPLE (gateways 32, 42, 52)
- SIP Proxies if the local domain is based on SIP/SIMPLE (gateways 22a, 22b).

Some translation function is necessary also in case of gateways acting as SIP Proxies. Indeed, a local presence domain could be based on a SIP different from SIMPLE or, in case of a presentity and a watcher connected to two SIMPLE-based domains, the two domains could not be completely equivalent, e.g. they could support different presence information.

The translation function implemented by an OPIG is specific for the local presence protocol but is independent from the presence protocol used by the destination domain. However, in order to allow some form of optimisation, the translation function of the OPIG can evaluate which specific mappings are required and which can be skipped, taking into account the type of remote protocol. For example, if the remote protocol does not support one of the not-basic procedures, such procedure can be terminated by the OPIG. The remote protocol can be determined by analysing the domain part of the resolved "destination" address (i.e. the SIMPLE method Request-URI) and by extracting the related protocol type from a configuration table using the domain value as key. Such configuration table is stored in all gateways applying optimisation functions.

However, in what is at present considered the best mode of carrying out the invention, said optimisation is not performed, and the originating domain does not have any knowledge about the destination domain. Thus the gateways are dummier and therefore cheaper.

Routing of SIMPLE messages towards the TPIGs is guaranteed by SIP routing.

The translation functions performed by the gateways carry out a mapping between local protocol messages and parameters and SIMPLE messages, headers and fields. The following rules for the mapping of WV/PAM/XMPP message parameters (local parameters) towards SIMPLE headers and fields have been envisaged:
1. whenever a parameter to be mapped exists with the same meaning in both protocols, the local parameter is mapped in the equivalent SIMPLE header and/or field, e.g. User-ID (WV) -> SIP-URI (SIMPLE)
2. in case a local parameter cannot be mapped as defined above, a new SIMPLE header containing the relevant information is defined for the SIMPLE message associated to the local message, e.g.
SubscribeRequest (WV): Auto-Subscribe -> New "AutoSubscribe" header of SUBSCRIBE method (SIMPLE)

Moreover, the following rules for gateway behaviour have been envisaged, in order to define the mapping of local parameters values into SIP/PIDF/XCAP header/values:
1. in the translation from local domain to SIMPLE domain, all parameters should be mapped and transferred towards the destination domain, unless the destination domain does not support some of them (this requires the optimisation function mentioned above and can be determined, as explained, by analysing the domain part of the resolved "destination" address);
2. in the translation from SIMPLE to local domain, parameters that are managed by the destination domain are mapped, and the others are discarded/ ignored.

Appended Table I (Annex I) details the mappings between the common presence interoperability protocol (i.e. SIMPLE) procedures and the local protocol procedures for a number of the above mentioned procedures. Appended Tables II to IV (Annex II) show in greater detail the conversion from WV protocol to SIMPLE protocol for the basic procedures. Similar tables are readily built by the skilled in the art for the other protocols envisaged.

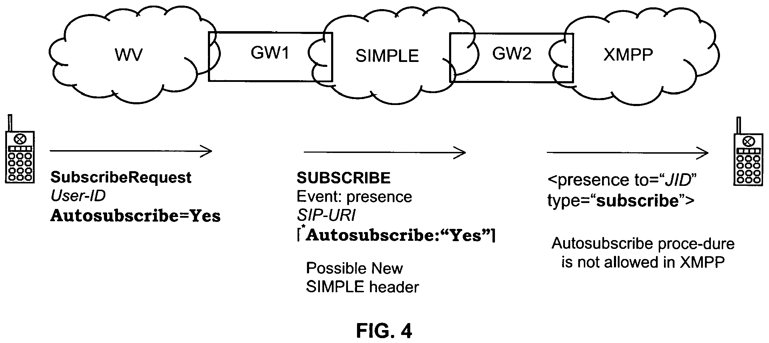

An example of application of the invention is shown also in Fig. 4 for the case of an Instant Messaging service between WV and XMPP technologies, in particular the case of a WV client subscribing for presence information of a Jabber user (XMPP).

The WV user performs subscription procedure by sending a SubscribeRequest message towards the user identified by User-ID. Auto-Subscribe parameter is set to "Yes", so that WV user asks for automatic subscription (unsubscription) to the presence attributes being enabled when a new user is added to (deleted from) the contact list.

GW1 (corresponding to the OPIG part of block 42 in Fig. 1) translates WV into SIMPLE protocol according to the rules described above. The message SubscribeRequest is translated into SUBSCRIBE request: User-ID parameter is mapped into SIP-URI, while Auto-Subscribe parameter requires the creation of a new SIP header (i.e. Autosubscribe). Anyway, taking into account the protocol of the destination domain (XMPP), the specific mapping of Auto-Subscribe parameter could be skipped, as it is not supported within XMPP.

GW2 (corresponding to the TPIG part of block 32 in Fig. 1) translates SIMPLE protocol into XMPP. SUBSCRIBE request is translated into XMPP Subscription Request and SIP-URI is mapped into JID.

Procedure mapping is not sufficient to attain a full interoperability among the different subsystems. Indeed, it is to be taken into account that some procedures - in particular the notification, the publication and possibly the subscription (when a user wishes to subscribe only a subset of all information available) - entail the transmission of the presence document containing the actual presence information or "attributes" characterising the user. The term "presence information", as used herein, refers therefore to information generated by both a presentity and a watcher. Now, it is to be considered that:
- presence documents generated in domains using different protocols use different formats, even if generally they are transmitted as text documents: in particular, XML (Extensible Markup Language) based format are used by XMPP, WV (DTD = Document Type Definition) and 3GPP/IETF (PIDF); IDL (Interface Definition Language) based Attribute - Value pairs are used by PAM;
- some presence attributes are defined in more domains ("common" attributes), but they may be identified through different attribute names or tags in the message (e.g. location, network status, ...) and might have different attribute values;
- some presence attributes are specific for one domain, e.g. TimeZone of WV.

According to the invention, the same approach as at the protocol level is followed also at the presence document level: a common (interoperability) format is defined, which is supported by the interoperability protocol and can be understood by all domains, and the presence documents drafted by an originating subsystem in its local, protocol-specific format are converted into the interoperability format. Conversely, the presence documents drafted in the interoperability format and to be passed to a destination subsystem are converted from the interoperability format to the local, protocol-specific format. The OPIG and TPIG units in gateways 22 - 52 are respectively used also for performing the translation from the local format into the interoperability format and vice versa. The presence document drafted in the interoperability format will be referred to as Interoperability Presence Document (IPD).

Taking into account that the majority of the formats defined for the wireless world by the different standardisation bodies are XML-based formats, the common format chosen according to the invention is also an XML-based format. More particularly, the common format is based upon the Common Presence and Instant Messaging Presence Information Data Format (CPIM/PIDF) defined for SIMPLE. The IPD drafted in such a format will be an extension of the RPIDF (Rich PIDF), which has been proposed by SIMPLE Working Group within IETF and is in turn an extension or enrichment of PIDF. The RPIDF is disclosed for instance in Internet Draft draft-ietf-simple-rpid-00 "RPID - Rich Presence Information Data Format", by R. Schulzrinne (ed.) et al., available at the same site as the above mentioned Internet Drafts. This choice offers the best consistency with the choice of SIMPLE as the common protocol.

As known to the skilled in the art, extending an XML-based format entails defining a new namespace for all extension elements, and a new tag for each extension element. The new namespace, referred to hereinafter as "interoperability namespace", is identified in the document by prefix "xmlns:int" and defines the new tags on the basis of the following rules:
- for each common attribute which cannot be mapped to an already existing tag of IETF CPIM PIDF (i.e. for attributes which are present in at least two different solutions but are identified through different tags), a new XML tag and its type are defined taking into account all possible mapping requirements from existing solutions;
- for each attribute which is domain specific and which cannot be mapped to an already existing tag of RPIDF, a new XML tag is defined as in its native domain.

Consequently, for mapping the local presence document into the IPD at an OPIG like OPIG 22a, the following rules apply:
1) if the local attribute can be mapped with the same meaning to a CPIM/PIDF defined attribute, existing CPIM/PIDF namespace tags are used;
2) if the local attribute can be mapped with the same meaning to an RPIDF defined attribute, existing RPIDF namespace tags are used;
3) if neither preceding rule applies, the tags defined in the interoperability namespace are used.

If the protocol mapping optimisation mentioned above is envisaged, a similar optimisation could be envisaged also for the format mapping. The translation function of the OPIG could evaluate which specific mappings are required and which can be skipped, taking into account the type of remote protocol and format. For instance, the OPIG could dispense with mapping information items that are not understood within the watcher domain. The remote format can be determined as disclosed above.

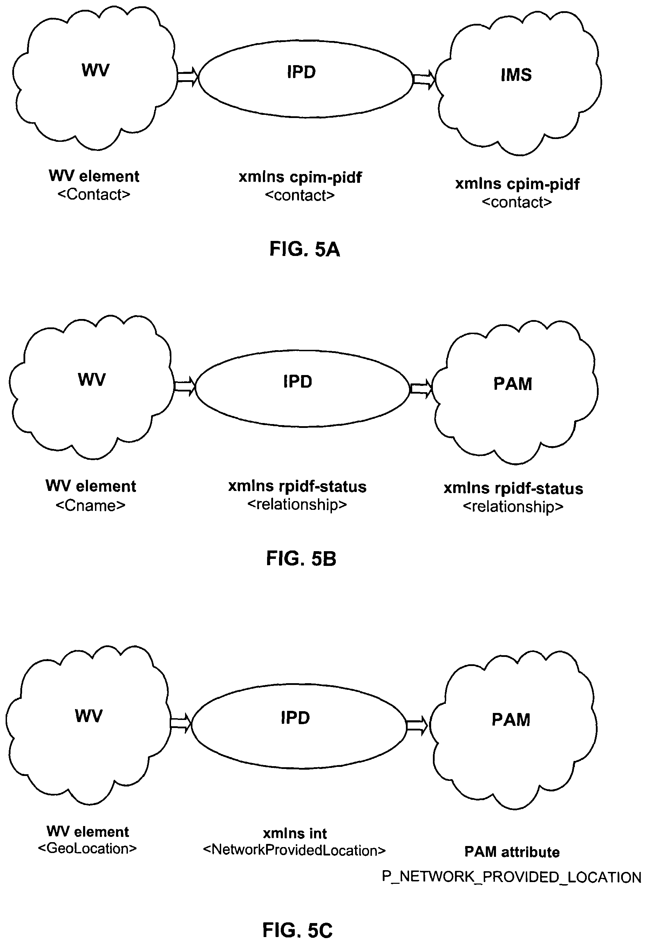

Figs. 5A to 5C graphically show some mapping examples. More particularly:
- Fig. 5A shows the mapping from WV to IMS for the "Contact" presence information element, which is part of the "preferred contact" attribute: this is a situation in which rule 1) applies, since an attribute with the same meaning ("contact") is defined in CPIM/PIDF;
- Fig. 5B shows the mapping between WV and PAM for the "relationship with a ?" (or Cname) presence information element, where rule 2 applies since the corresponding attribute <relationship> has been defined in RPIDF; and
- Fig. 5C shows the mapping between WV and PAM for the "geographical location" presence information element, where rule 3 applies, since no mapping is possible with either CPIM/PIDF or RPIDF tags.

The mapping of the attributes presently defined in domains 2 - 5 of Fig. 1 to the common format is shown in annexed tables V to VII (Annex III), which correspond to the application of rules 1) to 3), respectively. In practice, each gateway 22 - 52 will store a look-up table comprising the column of tables V to VII specific for the local format and that related to the common format.

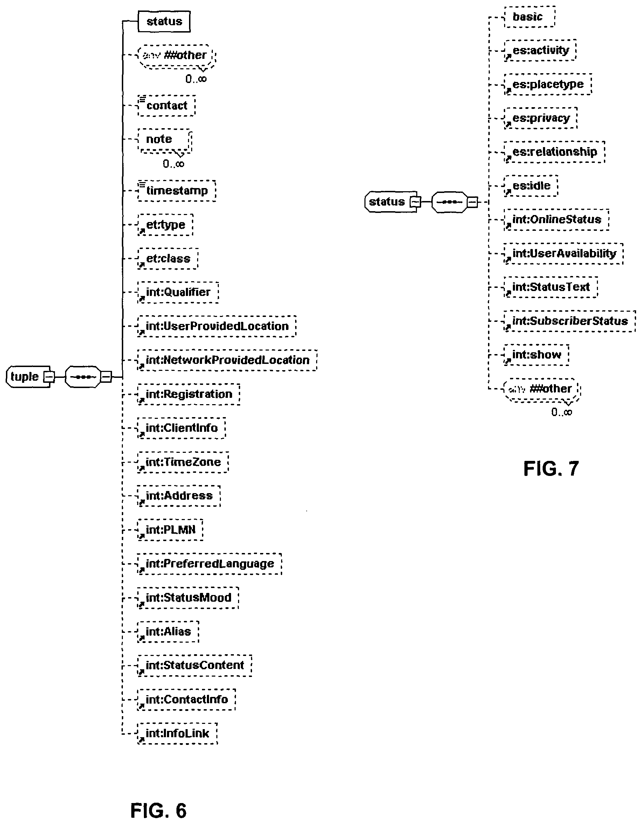

Any required mapping of a presentity presence document to the IPD is carried out by the OPIG on the basis of the IPD XML schema, which is enclosed as Annex IV. Figs. 5 and 6 provide the graphical representation of the XML Schema of Annex IV for IPD <tuple> and <status> elements. The information elements defined by RPIDF are identified by namespace et: (in the tuple diagram) or es: (in the status diagram), and those specific for the interoperability format are identified by *int:.* The elements defined by CPIM-PIDF (e.g. "contact" and "note" in the tuple diagram, "basic" in the status diagram) have no explicit namespace indication. It will be appreciated from Fig. 6 that the XML schema includes a number of RPIDF tags for attributes that at present have no correspondence in domains 2 - 5 in Fig. 1. Should any such attribute be defined in any of such domains, clearly it will be mapped according to rule 2.

At the other side, a TPIG will perform the inverse mapping of that carried out at the OPIG. Should the interoperability document contain attributes that are not defined in the local domain, the TPIG can discard them or it can adopt them when the presence service administrator decides that such attribute is of interest. In such case, the TPIG will extract any attribute as it is.

In accordance with the choice of SIMPLE as common protocol, the presence document translated into the interoperability format defined above will be transmitted over SIP network 6 within the SIP message demanded by the specific procedure within which the document has been generated. In particular, the document will be included in the message field following the SIP-protocol specific fields and identified by header "content-type", where the existence of a presence document will be indicated. That field of the SIP message - which is a text type message - will thus comprise a sequence of data strings, containing the different attributes to be transmitted and associated with either the CPIM/PIDF or the RPIDF or the interoperability tags, according to the above rules.

It is evident that the above description has been given by way of non-limiting example and that changes and modifications are possible without departing from the scope of the invention. Thus other local protocols and formats can be envisaged; further procedures can be implemented in the common protocol, the latter could be different from SIMPLE and the interoperability format could be an XML which is not based on CPIM/PIDF. On the other hand, any change or addition of a protocol and a format merely entails a change or addition in the conversion tables in the corresponding gateway.

### ANNEX I

**TABLE I: MAPPING TABLE**

| **Procedure** | **SIMPLE** | **WV** | **PAM** | **XMPP** |
|---|---|---|---|---|
| Publishing | **SIP PUBLISH** with Event: **presence** | **GetPresenceRequest GetPresenceResponse** | Interface: **IpPAMIdentityPresence** | </presence> stanza (transmitted on a stream) |
| | | | Method: **setIdentityPresence** | |
| Subscription/ Unsubscription | **SIP SUBSCRIBE** with Event: **presence** | **SubscribeRequest** | Interface: **IpPAMEventHandler** | </presence> stanza of type "subscribe"/"unsubscribe" for requests and type "subscribed"/"unsubscribed" for responses |
| | | | Method: **registerAppInterface** | |
| Notification | **SIP NOTIFY** with Event: **presence** | **PresenceNotification** | Interface: **IpAppPAMEventHandler** | </presence> stanza (received from a stream) |
| | | | Method: **eventNotify** | |
| Asking for watcher information | **SIP SUBSCRIBE** with Event: **presence.winfo** | **GetWatcherListRequest GetWatcherListResponse** | Not required because watcher identity is always known | Not required because watcher identity is always known |
| Asking for watcher authorisation | **SIP NOTIFY** with Event: **presence.winfo HTTP PUT** of an XML | **AuthorizationRequest AuthorizationResponse** | Not required because watcher is always authorized by end user | Not required because watcher is always authorized by end user |
| | formatted doc **(XCAP)** | | | |
| Updating of presence information | See Publishing | **UpdatePresenceRequest** | See Publishing | See Publishing |

### ANNEX II MESSAGGE MAPPING EXAMPLE: WV TO SIMPLE

**TABLE II: PUBLISHING**

| **WV** UpdatePresence Request | **SIMPLE** PUBLISH request | Description |
|---|---|---|
| Client-Originated | New-Header → Client-Originated: | Indicates whether the request is originated from the Client ("True") or not ("False") |
| Session ID | Call-ID: | Identifies the session (used to group a series of messages) |
| Transaction ID | Cseq: | Identifies and orders the transaction |
| Service-ID | From: SIP URI | Identifies the initiator domain |
| User-ID | Contact: SIP URI | Identifies the user represented by the requestor server domain. It is present if the request is originated from a client. |
| Presence-Value-List | <tuple id> | List of presence value to update |

**TABLE III: SUBSCRIPTION**

| **WV** SubscribeRequest | **SIMPLE** SUBSCRIBE request | Description |
|---|---|---|
| Client-Originated | New-Header → Client-Originated: | Indicates whether the request is originated from the Client ("True") or not ("False") |
| Session ID | Call-ID: | Identifies the session |
| Transaction ID | Cseq: | Identifies and orders the transaction |
| Service-ID | From: SIP URI | Identifies the initiator domain |
| User-ID | Contact: SIP URI | Identifies the user represented by the requestor server domain. It is present if the request is originated from a client. |
| User-ID-List | To: SIP URI(S) | Identifies the users to be subscribed |
| Auto-Subscribe | New Header → Autosubscribe: | "Yes" means that the automatic subscription (unsubscription) to the presence attributes is enabled when a new user is added to (removed from) the contact list. "No" means that the automatic subscription / unsubscription is disabled. |

**TABLE IV: NOTIFICATION**

| **WV** PresenceNotification | **SIMPLE** NOTIFY | Description |
|---|---|---|
| Client-Originated | New-Header → Client-Originated: | Indicates whether the request is originated from the Client ("True") or not ("False") |
| Session ID | Call-ID: | Identifies the session (used to group a series of messages) |
| Transaction ID | Cseq: | Identifies and orders the transaction |
| Service-ID | From: SIP URI | Identifies the initiator domain |
| User-ID | Contact: SIP URI | User represented by the requestor server domain. It is present if the request is originated from a client. |
| Subscribing-User-I D-List | To: SIP URI (S) | Users who subscribed to the presence change |
| Presence-Value-List | <tuple id> | List of presence value to update |

### ANNEX III

**TABLE V: MAPPING TO CPIM-PIDF NAMESPACE**

| **3GPP attribute** | **WV attribute** | **XMPP attribute** | **PAM attribute** | **cpim**-**pidf element** |
|---|---|---|---|---|
| Text | Note(CommC) | status | P_OTHER_INFO | <Note> |
| Network Status | Status(CommC); Cstatus(AddrPref) | type | P_NETWORK_STATUS | <basic> |
| Communication means | Cap(CommC); PrefC(AddrPref) | | P_COMMUNICATIONS_MEANS | URL of <contact> |
| Contact Address | Contact(CommC); Caddr(AddrPref) | from | P_CONTACT_ADDRESS | <contact> |
| Priority | Cpriority(AddrPref) | priority | P_PRIORITY | Attribute "priority" in <contact> |

**TABLE VI: MAPPING TO RPIDF NAMESPACE**

| **3GPP attribute** | **WV attribute** | **XMPP attribute** | **PAM attribute** | **rpidf element** |
|---|---|---|---|---|
| | Cname(AddrPref) | | | <relationship> |

**TABLE VII: MAPPING TO INT NAMESPACE**

| **3GPP attribute** | **WV attribute** | **XMPP attribute** | **PAM attribute** | **int element** |
|---|---|---|---|---|
| | OnLineStatus | | | <OnLineStatus> |
| | UserAvailability | | | <UserAvailability> |
| | StatusText | | | <StatusText> |
| Subscriber' s Status | | | P_SUBSCRIBER_STATUS | <SubscriberStatus> |
| | | show | | <Show> |
| | Qualifier | | | <Qualifier> |
| Subscriber provided location | FreeTextLocation | | P_SUBSCRIBER_PROVIDED_LOCATION | <UserProvided Location> |
| Network provided location | GeoLocation | | P_NETWORK_PROVIDED_LOCATION | <NetworkProvidedLocation> |
| | Reqistration | | | <Registration> |
| | ClientInfo | | | <Clientlnfo> |
| | TimeZone | | | <TimeZone> |
| | Address | | | <Address> |
| | PLMN | | | <PLMN> |
| | Preferred Language | | | <PreferredLanguage> |
| | StatusMood | | | <StatusMood> |
| | Alias | | | <Alias> |
| | StatusContent | | | <StatusContent> |
| | Contactlnfo | | | <ContactInfo> |
| | InfoLink | | | <InfoLink> |

### ANNEX IV

### XML SCHEMA FOR IPD.

```
 <?xml version="1.0" encoding="UTF-8"?>
 <xs:schema targetNamespace="urn:ietf:params:xml:ns:int-pidf"
 xmlns:tns="urn:ietf:params:xml:ns:cpim-pidf" xmlns:es="urn:ietf:params:xml:ns:pidf:rpid-status"
 xmlns:et="urn:ietf:params:xml:ns:pidf:rpid-tuple" xmlns:int="urn:ietf:params:xml:ns:int-pidf"
 xmlns:xs="http://www.w3.org/2001/XMLSchema"
     elementFormDefault="qualified" attributeFormDefault="unqualified">
     <!-- This import brings in the XML language attribute xml:lang-->
     <xs:import namespace="http://www.w3.org/XML/1998/namespace"
     schemaLocation="http://www.w3.org/2001/xml.xsd"/>
     <xs:complexType name="tuple">
      <xs:sequence>
       <xs:element name="status" type="tns:status"/>
       <xs:any namespace="##other" processContents="lax" minOccurs="0"
       maxOccurs="unbounded"/>
   <xs:element name="contact" minOccurs="0">
        <xs:complexType>
              <xs:simpleContent>
               <xs:extension base="xs:anyURI">
                <xs:attribute name="priority" type="tns:qvalue" use="required"/>
               </xs:extension>
              </xs:simpleContent>
        </xs:complexType>
       </xs:element>
       <xs:element name="note" type="tns:note" minOccurs="0" maxOccurs="unbounded"/>
       <xs:element name="timestamp" type="xs:dateTime" minOccurs="0"/>
       <xs:element ref="type" type="et:type" minOccurs="0"/>
       <xs:element ref="class" type="et:class" minOccurs="0"/>
       <xs:element ref="int:Qualifier" type="int:Qualifier" minOccurs="0"/> <!-- WV-->
   <xs:element ref="int:UserProvidedLocation" type="int:UserProvidedLocation"
   minOccurs="0"/> <!-- PAM/3GPP/WV-->
        <xs:element ref="int:NetworkProvidedLocation" type="int:NetworkProvidedLocation"
        minOccurs="0"/> <!-- PAM/3GPP/WV-->
        <!--WV-->
        <xs:element ref="int:Registration" minOccurs="0"/>
        <xs:element ref="int:ClientInfo" minOccurs="0"/>
        <xs:element ref="int:TimeZone" minOccurs="0"/>
        <xs:element ref="int:Address" minOccurs="0"/>
        <xs:element ref="int:PLMN" minOccurs="0"/>
        <xs:element ref="int:PreferredLanguage" minOccurs="0"/>
       <xs:element ref="int:StatusMood" minOccurs="0"/>
        <xs:element ref="int:Alias" minOccurs="0"/>
        <xs:element ref="int:StatusContent" minOccurs="0"/>
        <xs:element ref="int:ContactInfo" minOccurs="0"/>
        <xs:element ref="int:InfoLink" minOccurs="0"/>
      </xs:sequence>
  <xs:attribute name="id" type="xs:ID" use="required"/>
     </xs:complexType>
     <xs:complexType name="status">
      <xs:sequence>
       <xs:element name="basic" type="tns:basic" minOccurs="0"/>
       <xs:element ref="es:activity" type="xs:token" minOccurs="0"/>
       <xs:element ref="es:placetype" type="xs:token" minOccurs="0"/>
       <xs:element ref="es:privacy" type="tns:privacy" minOccurs="0"/>
       <xs:element ref="es:relationship" type="xs:token" minOccurs="0"/>
       <xs:element ref="es:idle" type="xs:dateTime" minOccurs="0"/>
       <!-- WE -->
       <xs:element ref="int:OnlineStatus" minOccurs="0"/>
       <xs:element ref="int:UserAvailability" minOccurs="0"/>
       <xs:element ref="int:StatusText" minOccurs="0"/>
       <xs:element ref="int:SubscriberStatus" type="int:SubscriberStatus" minOccurs="0"
       maxOccurs="1"/> <!--3GPP/PAM-->
   <xs:element ref="int:show" type="int:show" minOccurs="0"/> <!-- XMPP-->
       <xs:any namespace="##other" processContents="lax" minOccurs="0"
       maxOccurs="unbounded"/>
      </xs:sequence>
    </xs:complexType>
    <xs:element name="Accuracy" type="xs:string"/>
    <xs:element name="Address">
     <xs:complexType>
       <xs:sequence>
        <xs:element ref="Qualifier" minOccurs="0"/>
        <xs:element ref="Country" minOccurs="0"/>
        <xs:element ref="City" minOccurs="0"/>
        <xs:element ref="Street" minOccurs="0"/>
        <xs:element ref="Crossing1" minOccurs="0"/>
        <xs:element ref="Crossing2" minOccurs="0"/>
        <xs:element ref="Building" minOccurs="0"/>
        <xs:element ref="NamedArea" minOccurs="0"/>
        <xs:element ref="Accuracy" minOccurs="0"/>
       </xs:sequence>
      </xs:complexType>
     </xs:element>
     <xs:element name="Alias">
            <xs:complexType>
                   <xs:sequence>
                          <xs:element ref="Qualifier" minOccurs="0"/>
                          <xs:element ref="PresenceValue" minOccurs="0"/>
                   </xs:sequence>
            </xs:complexType>
     </xs:element>
     <xs:element name="Altitude" type="xs:string"/>
     <xs:element name="Building" type="xs:string"/>
     <xs:element name="City" type="xs:string"/>
     <xs:element name="ClientInfo">
            <xs:complexType>
                   <xs:sequence>
                          <xs:element ref="Qualifier" minOccurs="0"/>
                          <xs:element ref="ClientType" minOccurs="0"/>
                          <xs:element ref="DevManufacturer" minOccurs="0"/>
                          <xs:element ref="ClientProducer" minOccurs="0"/>
                          <xs:element ref="Model" minOccurs="0"/>
                          <xs:element ref="ClientVersion" minOccurs="0"/>
                          <xs:element ref="Language" minOccurs="0"/>
                   </xs:sequence>
            </xs:complexType>
     </xs:element>
     <xs:element name="ClientProducer" type="xs:string"/>
     <xs:element name="ClientType" type="xs:string"/>
     <xs:element name="ClientVersion" type="xs:string"/>
     <xs:element name="ContactInfo">
      <xs:complexType>
       <xs:sequence>
        <xs:element ref="Qualifier" minOccurs="0"/>
        <xs:element ref="ContainedvCard" minOccurs="0"/>
        <xs:element ref="ReferredvCard" minOccurs="0"/>
       </xs:sequence>
      </xs:complexType>
     </xs:element>
     <xs:element name="ContainedvCard" type="xs:string"/>
     <xs:element name="ContentType" type="xs:string"/>
     <xs:element name="Country" type="xs:string"/>
     <xs:element name="Crossing1" type="xs:string"/>
     <xs:element name="Crossing2" type="xs:string"/>
     <xs:element name="DevManufacturer" type="xs:string"/>
     <xs:element name="DirectContent" type="xs:string"/>
     <xs:element name="Inf_link">
      <xs:complexType>
       <xs:sequence>
        <xs:element ref="Link"/>
        <xs:element ref="Text" minOccurs="0"/>
        <xs:element ref="ContentType" minOccurs="0"/>
       </xs:sequence>
   </xs:complexType>
     </xs:element>
     <xs:element name="InfoLink">
      <xs:complexType>
       <xs:sequence>
        <xs:element ref="Qualifier" minOccurs="0"/>
        <xs:element ref="Inf_link" minOccurs="0" maxOccurs="unbounded"/>
       </xs:sequence>
      </xs:complexType>
     </xs:element>
     <xs:element name="OnlineStatus">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="PLMN">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="Language" type="xs:string"/>
     <xs:element name="Latitude" type="xs:string"/>
     <xs:element name="Link" type="xs:string"/>
     <xs:element name="Longitude" type="xs:string"/>
     <xs:element name="Model" type="xs:string"/>
     <xs:element name="NamedArea" type="xs:string"/>
     <xs:element name="PreferredLanguage">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="PresenceValue" type="xs:string"/>
     <xs:element name="Qualifier" type="xs:string"/>
     <xs:element name="ReferredContent" type="xs:string"/>
     <xs:element name="ReferredvCard" type="xs:string"/>
     <xs:element name="Registration">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="StatusContent">
      <xs:complexType>
       <xs:sequence>
        <xs:element ref="Qualifier" minOccurs="0"/>
        <xs:element ref="DirectContent" minOccurs="0"/>
        <xs:element ref="ReferredContent" minOccurs="0"/>
       <xs:element ref="ContentType"/>
      </xs:sequence>
      </xs:complexType>
     </xs:element>
     <xs:element name="StatusMood">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="StatusText">
      <xs:complexType>
       <xs:sequence>
        <xs:element ref="Qualifier" minOccurs="0"/>
        <xs:element ref="PresenceValue" minOccurs="0"/>
       </xs:sequence>
      </xs:complexType>
     </xs:element>
     <xs:element name="Street" type="xs:string"/>
     <xs:element name="Text" type="xs:string"/>
     <xs:element name="TimeZone">
      <xs:complexType>
       <xs:sequence>
        xs:element ref="Qualifier" minOccurs="0"/>
        <xs:element ref="Zone" minOccurs="0"/>
       </xs:sequence>
      </xs:complexType>
     </xs:element>
     <xs:element name="UserAvailability">
      <xs:complexType>
       <xs:sequence>
        <xs:element ref="Qualifier" minOccurs="0"/>
        <xs:element ref="PresenceValue" minOccurs="0"/>
       </xs:sequence>
   </xs:complexType>
     </xs:element>
     <xs:element name="Zone" type="xs:string"/>
  <xs:element name="UserProvidedLocation">
      <xs:complexType>
       <xs:sequence>
        <xs:element ref="Qualifier" minOccurs="0"/>
        <xs:element ref="PresenceValue" minOccurs="0"/>
       </xs:sequence>
   </xs:complexType>
     </xs:element>
     <xs:element name="NetworkProvidedLocation">
   <xs:complexType>
       <xs:sequence>
         <xs:element ref="Qualifier" minOccurs="0"/>
         <xs:element ref="Longitude" minOccurs="0"/>
         <xs:element ref="Latitude" minOccurs="0"/>
         <xs:element ref="Altitude" minOccurs="0"/>
         <xs:element ref="Accuracy" minOccurs="0"/>
       </xs:sequence>
      </xs:complexType>
     </xs:element>
     <xs:element name="SubscriberStatus" type="xs:string"/>
     <xs:element name="show" type="xs:string"/>
     </xs:schema>
```

## Claims

1. A method of managing presence-based services in a communication system (1) including a plurality of communication subsystems (2, 3, 4, 5) each supporting a presence service operating according to a respective local presence protocol, **characterised in that** the method comprises the steps of:
- converting presence-service messages produced by an entity (20, 200, 30, 40, 50) in an originating subsystem (2, 3, 4, 5) from the local presence protocol of that subsystem into an interoperability protocol;
- forwarding the information organised according to said interoperability protocol over a signalling network (6) supporting said interoperability protocol; and
- converting presence-service messages to be passed to an entity (20, 200, 30, 40, 50) in a destination subsystem from said interoperability protocol into the local presence protocol of said destination subsystem (2, 3, 4, 5),

2. A method as claimed in claim 1, **characterised in that** said signalling network (6) is a SIP-based signalling network and said interoperability protocol is the SIMPLE protocol.

3. A method as claimed in claim 2, **characterised in that**, for conversion from a local protocol into the SIMPLE protocol:
a) whenever a parameter to be mapped exists with the same meaning in both protocols, the local parameter is mapped in the equivalent SIMPLE header and/or field, and
b) in case a local parameter cannot be mapped as in a), a new SIMPLE header containing the relevant information is defined for the SIMPLE message associated to the local message.

4. A method as claimed in claim 2 or 3, **characterised in that**, for conversion from the SIMPLE protocol into the local protocol, parameters that are common to both protocols are mapped into the local protocol, whereas the others are ignored.

5. A method as claimed in any preceding claim, **characterised in that** at least some of said subsystems (2, 3, 4, 5) are mobile communication networks.

6. A communication system (1) made up of a plurality of communication subsystems (2, 3, 4, 5) each including means (21, 23-28, 31, 41, 51) for managing a presence-based service operating according to a respective local presence protocol, **characterised in that** the managing means (21, 23-28, 31, 41, 51) in each said subsystem (2, 3, 4, 5) are connected to protocol conversion means (22, 22a, 22b, 32, 42, 52) for converting presence-service messages generated by entities (20, 200, 30, 40, 50) in the concerned subsystem (2, 3, 4, 5) from the local protocol to an interoperability protocol, and for converting presence-service messages intended for entities (20, 200, 30, 40, 50) connected to that subsystem (2, 3, 4, 5) from said interoperability protocol to the local presence protocol, said protocol conversion means (22, 22a, 22b, 32, 42, 52) being connected through a signalling network (6) supporting said interoperability protocol and said protocol conversion means (22, 22a, 22b, 32, 42, 52) are arranged to convert the local presence protocol into the interoperability protocol and vice-versa.

7. A communication system (1) as claimed in claim 6, **characterised in that**,
said interoperability protocol is the SIMPLE protocol and said signalling network (6) is a SIP-based signalling network.

8. A communication system (1) as claimed in claim 7, **characterised in that**, for conversion from the local protocol into the SIMPLE protocol, said protocol conversion means (22, 22a, 22b, 32, 42, 52) are arranged to:
a) map a parameter of the local protocol that is common to the SIMPLE protocol into a corresponding header and/or field of the SIMPLE protocol,
b) create, for a parameter of the local protocol that is not common to the SIMPLE protocol, a new SIMPLE header containing the information conveyed by said parameter.

9. A communication system (1) as claimed in any claims 7 or 8, **characterised in that** said protocol conversion means (22, 22a, 22b; 32, 42, 52) act as SIP User Agents (UA) if they are connected to a subsystem (3, 4, 5) that is not based on SIP/SIMPLE, and as SIP Proxies if they are connected to a subsystem (2) that is based on SIP/SIMPLE

10. A communication system as claimed in any of claims 6 to 9, **characterised in that** one or more of said subsystems (2, 3, 4, 5) are mobile communication networks.

## Patentansprüche

1. Verfahren zum Verwalten von präsenzbasierten Diensten in einem Kommunikationssystem (1), das mehrere Kommunikationsuntersysteme (2, 3, 4, 5) aufweist, die jeweils einen Präsenzdienst unterstützen, der gemäß einem jeweiligen lokalen Präsenzprotokoll arbeitet, **dadurch gekennzeichnet,**
**dass** das Verfahren die folgenden Schritte umfasst:
- Umwandeln von Präsenzdienst-Nachrichten, die von einer Entität (20, 200, 30, 40, 50) in einem Ursprungs-Untersystem (2, 3, 4, 5) erzeugt werden, von dem lokalen Präsenzprotokoll des betreffenden Untersystems in ein Interoperabilitätsprotokoll;
- Weiterleiten der gemäß dem Interoperabilitätsprotokoll organisierten Informationen über ein Signalisierungsnetz (6), welches das Interoperabilitätsprotokoll unterstützt; und
- Umwandeln von Präsenzdienst-Nachrichten, die zu einer Entität (20, 200, 30, 40, 50) in einem Ziel-Untersystem zu übermitteln sind, von dem Interoperabilitätsprotokoll in das lokale Präsenzprotokoll dieses Ziel-Untersystems (2, 3, 4, 5).

2. Verfahren nach Anspruch 1, **dadurch gekennzeichnet, dass** das Signalisierungsnetz (6) ein SIP-basiertes Signalisierungsnetz ist und das Interoperabilitätsprotokoll das SIMPLE-Protokoll ist.

3. Verfahren nach Anspruch 2, **dadurch gekennzeichnet, dass** zur Umwandlung von einem lokalen Protokoll in das SIMPLE-Protokoll:
a) jedes Mal, wenn ein abzubildender Parameter mit derselben Bedeutung in beiden Protokollen existiert, der lokale Parameter in den äquivalenten SIMPLE-Header und/oder das äquivalente SIMPLE-Feld abgebildet wird, und
b) falls ein lokaler Parameter nicht wie in a) abgebildet werden kann, ein neuer SIMPLE-Header, der die relevanten Informationen enthält, für die der lokalen Nachricht zugeordnete SIMPLE-Nachricht definiert wird.

4. Verfahren nach Anspruch 2 oder 3, **dadurch gekennzeichnet, dass** zur Umwandlung vom SIMPLE-Protokoll in das lokale Protokoll Parameter, welche beiden Protokollen gemeinsam sind, in das lokale Protokoll abgebildet werden, während die anderen ignoriert werden.

5. Verfahren nach einem der vorhergehenden Ansprüche, **dadurch gekennzeichnet, dass** wenigstens einige der Untersysteme (2, 3, 4, 5) Mobilkommunikationsnetze sind.

6. Kommunikationssystem (1), das aus mehreren Kommunikationsuntersystemen (2, 3, 4, 5) besteht, die jeweils Mittel (21, 23-28, 31, 41, 51) zum Verwalten eines präsenzbasierten Dienstes aufweisen, der gemäß einem jeweiligen lokalen Präsenzprotokoll arbeitet, **dadurch gekennzeichnet, dass** die Verwaltungsmittel (21, 23-28, 31, 41, 51) in jedem Untersystem (2, 3, 4, 5) mit Protokollumwandlungsmitteln (22, 22a, 22b, 32, 42, 52) zum Umwandeln von Präsenzdienst-Nachrichten, die von Entitäten (20, 200, 30, 40, 50) in dem betreffenden Untersystem (2, 3, 4, 5) erzeugt wurden, von dem lokalen Präsenzprotokoll in ein Interoperabilitätsprotokoll und zum Umwandeln von Präsenzdienst-Nachrichten, die für mit dem betreffenden Untersystem (2, 3, 4, 5) verbundene Entitäten (20, 200, 30, 40, 50) bestimmt sind, von dem Interoperabilitätsprotokoll in das lokale Präsenzprotokoll verbunden sind, wobei diese Protokollumwandlungsmittel (22, 22a, 22b, 32, 42, 52) über ein Signalisierungsnetz (6) verbunden sind, welches das Interoperabilitätsprotokoll unterstützt, und diese Protokollumwandlungsmittel (22, 22a, 22b, 32, 42, 52) dafür ausgelegt sind, das lokale Präsenzprotokoll in das Interoperabilitätsprotokoll umzuwandeln, und umgekehrt.

7. Kommunikationssystem (1) nach Anspruch 6, **dadurch gekennzeichnet, dass** das Interoperabilitätsprotokoll das SIMPLE-Protokoll ist und das Signalisierungsnetz (6) ein SIP-basiertes Signalisierungsnetz ist.

8. Kommunikationssystem (1) nach Anspruch 7, **dadurch gekennzeichnet, dass** zur Umwandlung von dem lokalen Protokoll in das SIMPLE-Protokoll die Protokollumwandlungsmittel (22, 22a, 22b, 32, 42, 52) dafür ausgelegt sind:
a) einen Parameter des lokalen Protokolls, welcher diesem und dem SIMPLE-Protokoll gemeinsam ist, in einen entsprechenden Header und/oder ein entsprechendes Feld des SIMPLE-Protokolls abzubilden,
b) für einen Parameter des lokalen Protokolls, welcher diesem und dem SIMPLE-Protokoll nicht gemeinsam ist, einen neuen SIMPLE-Header zu erzeugen, der die Informationen enthält, die durch diesen Parameter transportiert werden.

9. Kommunikationssystem (1) nach einem der Ansprüche 7 oder 8, **dadurch gekennzeichnet, dass** die Protokollumwandlungsmittel (22, 22a, 22b; 32, 42, 52) als SIP-Benutzeragenten (User Agents, UA) agieren, falls sie mit einem Untersystem (3, 4, 5) verbunden sind, welches nicht auf SIP/SIMPLE basiert, und als SIP-Proxys, falls sie mit einem Untersystem (2) verbunden sind, welches auf SIP/SIMPLE basiert.

10. Kommunikationssystem nach einem der Ansprüche 6 bis 9, **dadurch gekennzeichnet, dass** eines oder mehrere der Untersysteme (2, 3, 4, 5) Mobilkommunikationsnetze sind.

## Revendications

1. Un procédé de gestion de services basés sur la présence dans un système de communication (1) comprenant une pluralité de sous-systèmes de communication (2, 3, 4, 5), chacun d'eux prenant en charge un service de présence fonctionnant selon un protocole de présence local respectif, **caractérisé en ce que** le procédé comprend les étapes suivantes :
- la conversion de messages de service de présence produits par une entité (20, 200, 30, 40, 50) dans un sous-système d'origine (2, 3, 4, 5) provenant du protocole de présence local de ce sous-système vers un protocole d'interopérabilité,
- la transmission des informations organisées selon ledit protocole d'interopérabilité par l'intermédiaire d'un réseau de signalisation (6) prenant en charge ledit protocole d'interopérabilité, et
- la conversion de messages de service de présence à transmettre à une entité (20, 200, 30, 40, 50) dans un sous-système de destination dudit protocole d'interopérabilité vers le protocole de présence local dudit sous-système de destination (2, 3, 4, 5).

2. Un procédé selon la revendication 1, **caractérisé en ce que** ledit réseau de signalisation (6) est un réseau de signalisation de type SIP et ledit protocole d'interopérabilité est le protocole SIMPLE.

3. Un procédé selon la revendication 2, **caractérisé en ce que**, pour la conversion d'un protocole local vers le protocole SIMPLE :
a) chaque fois qu'un paramètre à apparier existe avec le même sens dans les deux protocoles, le paramètre local est apparié dans l'entête et/ou champ SIMPLE équivalent, et
b) dans le cas où un paramètre local ne peut pas être apparié comme dans a), un nouvel entête SIMPLE contenant les informations pertinentes est défini pour le message SIMPLE associé au message local.

4. Un procédé selon la revendication 2 ou 3, **caractérisé en ce que**, pour la conversion du protocole SIMPLE vers le protocole local, les paramètres qui sont communs aux deux protocoles sont appariés vers le protocole local, tandis que les autres sont ignorés.

5. Un procédé selon l'une quelconque des revendications précédentes, **caractérisé en ce qu'**au moins certains desdits sous-systèmes (2, 3, 4, 5) sont des réseaux de communication mobiles.

6. Un système de communication (1) composé d'une pluralité de sous-systèmes de communication (2, 3, 4, 5), chacun d'eux comprenant un moyen (21, 23-28, 31, 41, 51) de gestion d'un service basé sur la présence fonctionnant selon un protocole de présence local respectif, **caractérisé en ce que** le moyen de gestion (21, 23-28, 31, 41, 51) dans chacun desdits sous-systèmes (2, 3, 4, 5) est raccordé au moyen de conversion de protocole (22, 22a, 22b, 32, 42, 52) destiné à la conversion de messages de service de présence générés par des entités (20, 200, 30, 40, 50) dans le sous-système concerné (2, 3, 4, 5) du protocole local vers un protocole d'interopérabilité, et destiné à la conversion de messages de service de présence destinés aux entités (20, 200, 30, 40, 50) raccordées à ce sous-système (2, 3, 4, 5) dudit protocole d'interopérabilité au protocole de présence local, ledit moyen de conversion de protocole (22, 22a, 22b, 32, 42, 52) étant raccordé par l'intermédiaire d'un réseau de signalisation (6) prenant en charge ledit protocole d'interopérabilité, et ledit moyen de conversion de protocole (22, 22a, 22b, 32, 42, 52) est agencé de façon à convertir le protocole de présence local vers le protocole d'interopérabilité et vice-versa.

7. Un système de communication (1) selon la revendication 6, **caractérisé en ce que** ledit protocole d'interopérabilité est le protocole SIMPLE et ledit réseau de signalisation (6) est un réseau de signalisation de type SIP.

8. Un système de communication (1) selon la revendication 7, **caractérisé en ce que**, pour la conversion du protocole local vers le protocole SIMPLE, ledit moyen de conversion de protocole (22, 22a, 22b, 32, 42, 52) est agencé de façon à :
a) apparier un paramètre du protocole local qui est commun au protocole SIMPLE vers un entête et/ou un champ correspondant du protocole SIMPLE,
b) créer, pour un paramètre du protocole local qui n'est pas commun au protocole SIMPLE, un nouvel entête SIMPLE contenant les informations acheminées par ledit paramètre.

9. Un système de communication (1) selon l'une quelconque des revendications 7 ou 8, **caractérisé en ce que** ledit moyen de conversion de protocole (22, 22a, 22b, 32, 42, 52) agit en tant qu'agent d'utilisateur (UA) SIP s'il est raccordé à un sous-système (3, 4, 5) qui n'est pas basé sur SIP/SIMPLE, et en tant que mandataire SIP s'il est raccordé à un sous-système (2) qui est basé sur SIP/SIMPLE.

10. Un système de communication selon l'une quelconque des revendications 6 à 9, **caractérisé en ce qu'**un ou plusieurs desdits sous-systèmes (2, 3, 4, 5) sont des réseaux de communication mobiles.
